# EUROPEAN PATENT APPLICATION

(11) **EP 1 879 042 A1**
(43) Date of publication of application: **16.01.2008**
(21) Application number: 06405295.4
(22) Date of filing: 11.07.2006
(51) Int. Cl.: G01S 5/14

(54) **A method for determining the position of a mobile device**

(71) Applicant: u-blox AG, 8800 Thalwil (CH)
(72) Inventor: Ammann, Daniel, 8134 Adliswil (CH)
(74) Representative: Wagner, Wolfgang Heribert

(57) **Abstract**

A mobile device (6) is to be enabled to determine its position during a positioning interval of several days or even weeks without its having to use ephemeris data broadcast by positioning satellites (1) or other data received via, e.g., a radio link. For that purpose differential data which amount to some 10kByte per day of the positioning interval are transmitted to the device (6) at or before the beginning of the positioning interval. The device (6) uses them to calculate differential functions, preferably polynomials covering subintervals of one to eight hours, for clock offsets and satellite position components which differential functions are then added to approximate actual satellite trajectory data calculated from almanac data. The resulting actual satellite trajectory data allow for determining the position of the device (6) with an accuracy of between several meters and tens of meters.

## Description

### Field of the invention

The invention concerns a method for determining the position of a mobile device according to the generic clause of claim 1 where the device makes use of a Global Navigation Satellite System (GNSS) like the well-known Global Positioning System (GPS) or related systems like GLONASS or Galileo or even of a combination of such systems. Such methods allow the device in question to establish its position with high accuracy without requiring short term data like ephemeris data broadcast from the positioning satellites.

### Prior art

In order to be able to determine its position with high accuracy, i.e., an error of not more than a few tens of meters, a GPS device normally uses ephemeris data broadcast by the GPS satellites in view. Ephemeris data transmitted by a satellite contain parameters defining its trajectory, clock offset etc. and usually allow a calculation of the position of the satellite and its distance from the GPS device with high accuracy during an interval of two to four hours. However, as they are transmitted only every 30 seconds it normally takes considerable time until a first position is determined after start-up (time-to-first-fix) if ephemeris data broadcast by the positioning satellites are used. If the signal is weak they may moreover be difficult or even impossible to extract.

It has therefore been proposed to transmit ephemeris data received by satellite tracking stations to GPS devices via a radio link. According to WO 00/48 017 A1 the amount of data to be transmitted is reduced in that almanac data which are broadcast by every GPS satellite every 12,5 minutes and contain data for all GPS satellites that are valid for longer periods but are much less accurate than ephemeris data are used as a basis and only corrections transmitted instead of the complete ephemeris data.

However, as in these cases the radio link has to be more or less permanent which is often inconvenient or even impossible further methods have been developed where the GPS device is provided with data enabling high accuracy positioning for days in advance. They make use of mathematical models in order to calculate satellite trajectories and clock offsets on a server in advance for much longer periods than the few hours covered by the ephemeris model while offering about the same degree of accuracy.

In US 6 542 820 B2 and US 6 560 534 B2 generic methods involving this type of calculation are described where the projected satellite tracking data are converted, e.g., to several sets of ephemeris-like data each of which is valid for a period of six hours. After the data have been transmitted to the GPS device the latter can function for several days in isolation, using the appropriate ephemeris-like data set at each point in time.

Similarly, according to WO 2006/031 652, satellite states are calculated in advance for a period of, e.g., seven days by a server and transmitted in compressed or uncompressed form wholly or in part to a GPS device which can then operate for the whole period without any contact with the server, interpolating between such calculated states in order to determine satellite trajectory data for a given point in time.

With these known generic methods, however, the amount of data which need to be transmitted to the GPS device and the ensuing memory and power requirements tend to be large.

### Summary of the invention

It is therefore an object of the invention to provide a generic method where the amount of data to be transmitted to the device is relatively small. This object is achieved by the features in the characterizing portion of claim 1.

With the method according to the invention a GNSS device can work without ephemeris or even almanac data decoded from the GNSS satellite signals and without a radio link with a terrestrial station for several days or even weeks and with high accuracy, i.e., a positioning error limited to a few tens of meters. As a consequence, high accuracy can be achieved even with weak signals and unfavourable signal to noise ratios. Time-to-first-fix is short and memory and power requirements at the device are modest.

### Brief description of the drawings

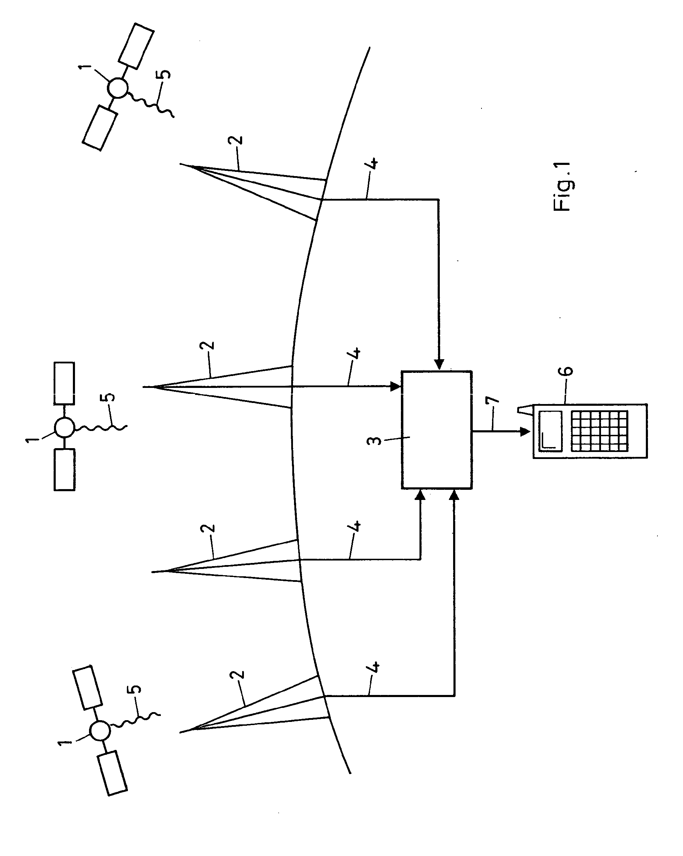

In the following the invention is described in more detail with reference to drawings where
- Fig. 1: shows schematically a positioning system for carrying out the method according to the invention,
- Fig. 2: shows a diagram representing exemplary spatial coordinate component differential functions for a positioning satellite over a five day positioning interval and
- Fig. 3: shows a diagram representing the deviation of actual trajectory data and of trajectory prediction data from the true position of a positioning satellite over a five day positioning interval.

### Description of the preferred embodiments

A positioning system, e.g., the well-known Global Positioning System (GPS) comprises a number of positioning satellites 1, e.g., about 30 of them, orbiting the globe, a number of terrestrial satellite tracking stations 2 for tracking the positioning satellites 1 and communicating with them which are distributed over the surface of the globe and connected to a service center 3 by data links 4, e.g., fixed telephone lines or the internet. Each of the positioning satellites 1 continually broadcasts a positioning signal 5 which is specific for the positioning satellite 1 in question.

A mobile device 6 which comprises a receiver for receiving positioning signals, a CPU and memory and optionally further components receives the positioning signals 5 as broadcast by those of the positioning satellites 1 which are in view. From satellite trajectory data of four or more of the positioning satellites 1 or rather, in particular, their actual clock offsets and positions which can be determined from the said data in a straightforward manner, and the runtime differences of the signals broadcast by them it is possible for the device 6 to determine its own position. The calculations employed in this context are well known in the art and will not be further explained here. The trajectory data may essentially comprise clock offsets and clock drifts, positions and velocities of the positioning satellites 1 etc. at points in time which follow each other at sufficiently small intervals to allow straightforward calculation of relevant parameters over a positioning interval.

The positioning signal 5 broadcast by a positioning satellite 1 contains basic data which are known as almanac data in the case of the GPS. The almanac data allow the calculation of approximate actual satellite trajectory data for each of the positioning satellites 1 with reduced accuracy, from which the device position can be determined, albeit with correspondingly low accuracy.

The GPS almanac data are repeated every 12.5 min. They are typically updated once in 24 hours but can be used during a positioning interval of several days, e.g., two to twenty days for calculating approximate actual trajectory data which comprise the clock offsets and positions of the positioning satellites 1 with only insignificant loss of accuracy as compared with approximate actual trajectory data based on most recent almanac data.

Apart from the almanac data the positioning signal 5 of each of the positioning satellites 1 also contains so-called ephemeris data which are repeated every 30 sec and updated every two to four hours. From them the trajectory data for the positioning satellite 1 in question can be calculated with high accuracy, allowing for the determination of the device position components with corresponding accuracy, its mean root square deviation being in the range of a few meters. However, ephemeris data have only a short service life and become virtually unusable soon after the end of their validity interval and if the positioning signal 5 of a positioning satellite 1 is weak and signal to noise ratio low it may be impossible to reliably extract them.

Mathematical models taking into account gravitational pulls from earth, sun and moon, radiation pressure from the sun etc. have been developed and are routinely used for the calculation of trajectory prediction data providing satellite trajectory data for a positioning interval which may be between two and twenty days or even longer in advance with an accuracy which is similar to the accuracy of satellite trajectory data based on ephemeris data, enabling a device to calculate its position with a root mean square deviation of a few tens of meters. Calculations based on such model are run on a server in the service station 3, using the data collected by the satellite tracking stations 2. The said stations assess past trajectories of the positioning satellites 1 with very high accuracy which in turn allows continual fine tuning of the model and in particular the determination of parameters based on a least squares adjustment or similar. There are several institutions which are using and developing mathematical models for the motions of GNSS satellites and provide potential users with calculated trajectory prediction data, in particular the Processing Centers of the International GNSS Service (IGS), JPL MS 238-540, 4800 Oak Grove Drive, Pasadena, CA 91109, USA. They can be approached via the IGS.

According to the method of the present invention which may be used in the context of the GPS or any other system offering the prerequisites for its use, approximate actual satellite trajectory data are calculated from the basic data, i.e., the most recent almanac data in the context of the GPS and difference terms determined each of which represents the difference between some piece of data according to the actual trajectory prediction data and according to the approximate actual satellite trajectory data for some point in time during the positioning interval. For each relevant piece of data a differential function of time which depends on a number of parameters is then determined, e.g., by a least squares calculation, in such a way that it closely approximates the said difference terms over the positioning interval. A differential term at any given point in time may then be determined by evaluating the differential function. At corresponding points in time differential terms closely approximate the difference terms which have been used for determining the differential function.

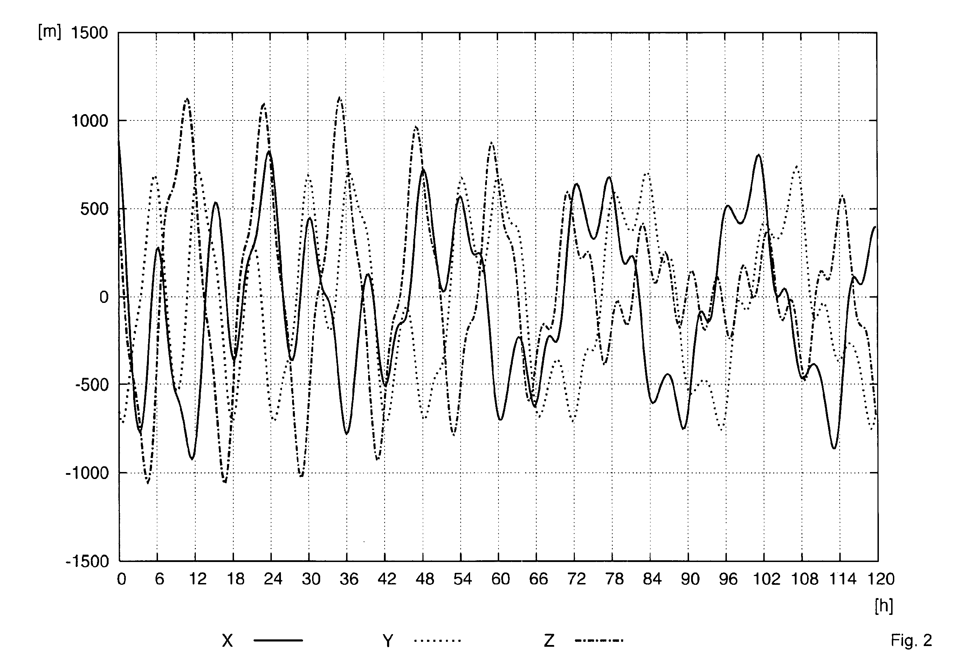

An example of such differential functions for the X, Y and Z components of the position of a positioning satellite 1 for a 120 hour, i.e., five day positioning interval can be seen in Fig. 2. As is apparent from the diagram, the approximate actual trajectory data offer only a reduced accuracy, with the maxima of the differential functions in this case slightly above 1km. The root mean square deviation of a device position determined from them alone may be between 100m and 2km.

The differential functions can have various formats. It is, however, desirable that they can be represented by a small set of differential data. One possibility is to divide the positioning interval into subintervals of, e.g., between one and eight hours, in particular two hours, and to approximate the difference within any of those subintervals by a preferably continuous or smooth partial function. For clock offsets as well as for satellite position components polynomials have been found to offer high accuracy at low cost in terms of data and ensuing transmission and storage capacity requirements as well as power use.

For clock offsets quadratic polynomials have been found to be adequate as differential functions. Satellite position components may require polynomials of orders between two and seven. Every coefficient can be represented by a 16 bit integer if fixed scale factors are applied. In that case differential data of less than 10kbyte, on average about 8kByte are necessary for encoding all required differential functions for about 30 satellites for one day of the positioning interval. While it is possible to use exclusively polynomials, other representations may also be appropriate for at least part of the differential functions, depending on their properties, e.g., sums of trigonometric functions where it may be possible to avoid a division of the positioning interval into subintervals and where the differential data are coefficients and phase shifts etc..

At some transmission time before the beginning of the positioning interval the the differential data which define the differential functions are transmitted from the center station 3 or some other terrestrial station to the device 6 via some data link 7 which may be a radio or telephone link or the internet together with basic data, i.e., in the GPS context, usually the most recent almanac data. Alternatively, the almanac data may be decoded from the positioning signal of a positioning satellite, preferably as well before the beginning of the positioning interval, e.g., essentially at transmission time. As the data need only be retrieved once and are broadcast by every one of the positioning satellites every 12.5 min this is usually not problematic.

Having received the basic data and the differential data the device 6 can now calculate actual satellite trajectory data for any point in time within the positioning interval with a desired accuracy which will allow for determining the device position with a root mean square deviation of between several meters and tens of meters, usually 100m or less, without requiring any additional data. The accuracy is usually very high - the deviation being of the order of meters - at the beginning of the positioning interval, with a tendency to deteriorate somewhat over time as random influences and deviations that are, like the clock offsets, in part stochastic, negatively affect the correspondence between the trajectory prediction data and the actual satellite trajectories.

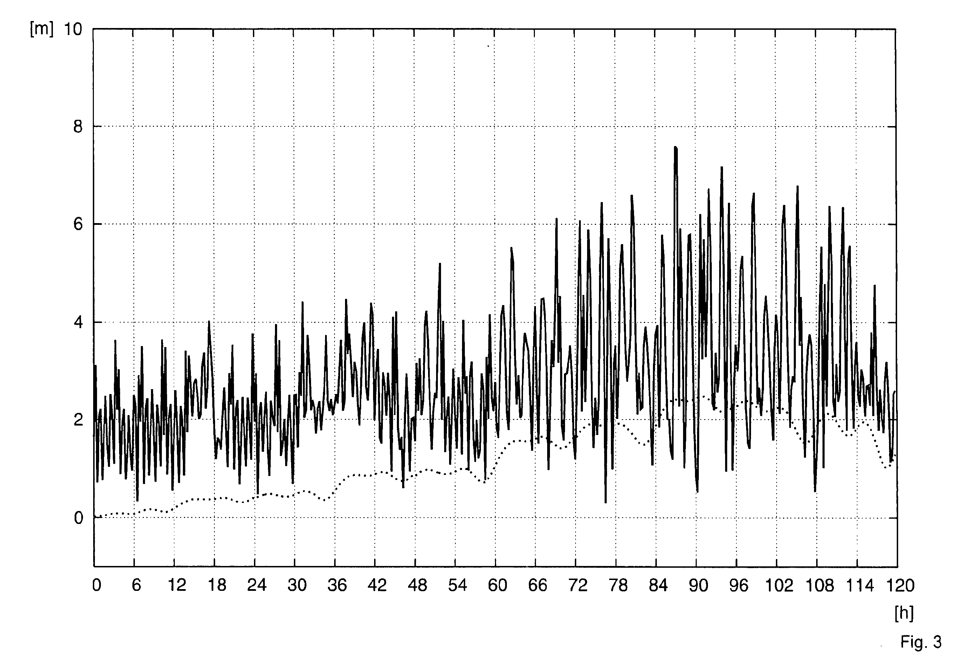

Fig. 3 shows the distance of the position of one of the positioning satellites 1 according to the trajectory prediction data (dashed line) from the actual position as determined from virtually exact satellite trajectory data extracted ex post from data collected by the satellite tracking stations 2 as a function of time and (solid line) the same distance for the position of the same positioning satellite 1 as derived from the actual trajectory data as calculated from the basic data and the differential functions according to the proposed method. Obviously, the root mean square deviation of the satellite position as calculated in accordance with the proposed method is of the same order of magnitude - a few meters - as the deviation of the 'exact' position as calculated directly with the mathematical model.

Generally, the device position can be determined from the basic data and the differential functions with high accuracy even where the positioning signals 5 are rather weak as only their code phase and possibly their carrier phase need be determined but no further analysis is necessary.

### List of reference symbols

- 1: positioning satellite
- 2: satellite tracking station
- 3: service center
- 4: data link
- 5: positioning signal
- 6: device
- 7: data link

## Claims

1. A method for determining the position of a mobile device (6) at some point in time within a positioning interval, where positioning signals (5) from a number of positioning satellites (1) pertaining to a global satellite positioning system which are in view of the device (6) are received by the same and the position of the device (6) is determined from actual trajectory data for the said positioning satellites (1) exhibiting a desired accuracy and comprising a number of trajectory data components including the actual positions and clock offsets of the positioning satellites (1) and from runtime differences of the positioning signals (5) emitted by the positioning satellites (1), the actual trajectory data of each of the positioning satellites (1) in view having been determined in the device (6) from trajectory prediction data produced by a server using a mathematical model and at least in part previously transmitted to the device (6) at a transmission time before or at the beginning of the positioning interval from a terrestrial station, **characterized in that** the device (6) receives the trajectory prediction data in the form of basic data, and of differential data transmitted to the device (6) at the transmission time from the terrestrial station and that approximate actual trajectory data of the positioning satellites (1) whose reduced accuracy is generally lower than the desired accuracy are determined from the basic data whereupon the actual trajectory data are determined from the approximate actual trajectory data and the differential data.

2. The method of claim 1, **characterized in that** the basic data are periodically broadcast by each of the positioning satellites (1) and allow for calculating the approximate actual trajectory data of each positioning satellite (1).

3. The method of claim 1 or 2, **characterized in that** the length of the positioning interval is between two days and twenty days.

4. The method of one of claims 1 to 3, **characterized in that** the differential data allow for the calculation of differential terms each of which is essentially the difference between a component of the actual trajectory data and a corresponding component of the approximate actual trajectory data.

5. The method of claim 4, **characterized in that** each differential term is determined by the evaluation of a differential function of time.

6. The method of claim 5, **characterized in that** at least in part the differential functions are made up of smooth partial functions each covering a subinterval of the positioning interval.

7. The method of claim 6, **characterized in that** the subintervals each have a length of between one hour and eight hours.

8. The method of claim 6 or 7, **characterized in that** each of the partial functions is a polynomial.

9. The method of claim 8, **characterized in that** each of the polynomials is of an order of between two and seven.

10. The method of one of claims 5 to 9, **characterized in that** at least in part the differential functions are sums of trigonometric functions.

11. The method of one of claims 5 to 10, **characterized in that** the differential data allow for the calculation of at least a clock offset differential function and three spatial position component differential functions for each positioning satellite.

12. The method of one of claims 1 to 11, **characterized in that** the desired accuracy allows for a determination of the position of the device (6) with a root mean square deviation of not more than 100m.

13. The method of one of claims 1 to 12, **characterized in that** the reduced accuracy allows for a determination of the position of the device (6) with a root mean square deviation of between 100m and 2km.

14. The method of one of claims 1 to 13, **characterized in that** the differential data amount to no more than 10kByte per day of the positioning interval.
